# EUROPÄISCHE PATENTSCHRIFT

(11) **EP 0 535 116 B1**
(45) Veröffentlichungstag und Bekanntmachung des Hinweises auf die Patenterteilung: **06.09.1995**
(21) Anmeldenummer: 91912026.1
(22) Anmeldetag: 24.06.1991
(51) Int. Cl.: B60G 17/04

(54) **HYDROPNEUMATISCHE FEDERUNG FÜR FAHRZEUGE**
HYDROPNEUMATIC VEHICLE SUSPENSION
SUSPENSION HYDROPNEUMATIQUE POUR VEHICULES

(30) Priorität: 28.06.1990 DE 4020557
(43) Veröffentlichungstag der Anmeldung: 07.04.1993
(73) Patentinhaber: ZAHNRADFABRIK FRIEDRICHSHAFEN AG, 88015 Friedrichshafen (DE)
(72) Erfinder: HAUPT, Josef, W-7992 Tettnang (DE)
(86) Internationale Anmeldenummer: EP9101175
(87) Internationale Veröffentlichungsnummer: WO9200203

(56) Entgegenhaltungen:
- DE-A- 2 807 299
- DE-B- 1 183 383
- FR-A- 2 064 541
- FR-A- 2 152 351
- GB-A- 1 170 566
- RESEARCH DISCLOSURE No. 290, June 1988, NEW YORK DAN R. KIMBERLIN: "Active ride economy valve"

## Beschreibung

Die Erfindung bezieht sich allgemein auf eine hydropneumatische Federung für Kraftfahrzeuge. Diese weist hydropneumatische Stellglieder auf, die zwischen gefederten und ungefederten Massen angebracht sind. Ein Niveauregelventil wird in Abhängigkeit von der relativen Stellung der gefederten und ungefederten Massen Zueinander betätigt und verbindet die hydropneumatischen Stellglieder in einer ersten Schaltstellung mit einer Druckleitung und in einer zweiten Schaltstellung mit einer Ablaufleitung. In einer weiteren Schaltstellung werden diese Verbindungen gesperrt.

Eine hydropneumatische Federung der vorstehend erläuterten Bauart ist allgemein unter dem Begriff Niveauregelung bekannt. Bei zunehmender Achslast wird Druckmittel, z. B. Öl, in einen Speicher gedrückt. Der Aufbau (ungefederte Massen) sinkt ab. Ein Niveauregelventil wird so verstellt, daß Öl über eine Druckleitung, beispielsweise aus einem Zentralspeicher, so lange den hydropneumatischen Stellgliedern zugeführt wird, bis das ursprüngliche Niveau wieder erreicht ist. Bei abnehmender Achslast fließt Öl aus dem Speicher. Das Niveauregelventil verbindet die hydropneumatischen Stellglieder in dieser Schaltstellung mit einer Ablaufleitung, bis das ursprüngliche Niveau wieder hergestellt ist. Eine hydropneumatische Federung, die nach diesem Prinzip arbeitet, ist beispielsweise der DE 17 80 394 A1 als bekannt zu entnehmen.

Zur Anpassung einer hydropneumatischen Federung für Kraftfahrzeuge an unterschiedliche Belastungszustände sind bereits verschiedene Vorschläge gemacht worden, die auf die Änderung der Federhärte der hydropneumatischen Stellglieder abzielen. Aus der DE 17 55 079 B2 ist eine Anordnung bekanntgeworden, bei der ein federbelastetes 3-Wege-Ventil den kolbenstangenseitigen Ringraum selbsttätig entweder mit einer Ablaufleitung oder mit dem Speicherraum verbindet. Hierdurch ist die Federhärte bei unbeladenem Fahrzeug geringer als bei beladenem Fahrzeug.

Bei einer Radaufhängung für ein landwirtschaftliches Mehrzweckfahrzeug (DE 28 07 299 C2) ist der Druckraum des hydropneumatischen Stellglieds über ein Sperrventil an einen Speicher anschließbar. Parallel zum Sperrventil verläuft eine Druckleitung, in die ein 3/3-Wege-Ventil eingeschaltet ist. Bei geschlossenem Sperrventil übernehmen Blattfedern die Abstützung des Aufbaus. Bei unbeladenem Zustand des Fahrzeugs liegt eine sehr weiche Abfederung vor. Durch Öffnen des Sperrventils wird die mechanische Federung hydropneumatisch unterstützt. Die Kennlinie dieser Federung ist sodann erheblich steiler, womit die Federung härter ausfällt. Durch Verstellung des 3/3-Wege-Ventils wird der Druck des Druckmittels des hydropneumatischen Stellglieds auf den für die jeweilige Belastung erforderlichen Wert, der über ein Manometer eingestellt wird, gebracht.

Bei landwirtschaftlich genutzten Fahrzeugen, z. B. bei Schleppern, kommt es zu großen Achslastspreizungen. Bei Arbeiten mit einem Anbaupflug wird die Hinterachse stark be- und die Vorderachse stark entlastet. Umgekehrte Verhältnisse liegen bei Arbeiten mit einem Frontlader vor. Die bekannten Maßnahmen zur Anpassung einer hydropneumatischen Federung erlauben keine Berücksichtigung derart unterschiedlicher Einsatzverhältnisse.

GB-A-1 170 566 offenbart eine hydropneumatische Federung gemäß dem Oberbegriff des Anspruchs 1.

Die der Erfindung zugrundeliegende Aufgabe besteht in der Auslegung einer hydropneumatischen Federung, bei der das statische Druckverhältnis, resultierend aus größter und kleinster Achslast, der maximal zulässige dynamische Druck, das maximal zulässige Druckverhältnis des Speichers, sowie der Verbleib einer Rest-Ölmenge im Speicher bei minimaler Achslast ausreichend berücksichtigt bzw. gewährleistet ist. Die Eigenfrequenz des Aufbaus sollte bei einem land- und bauwirtschaftlich genutzten Fahrzeug bei 1 Hertz liegen.

Die der Erfindung zugrundeliegende Aufgabe wird dadurch gelöst, daß die hydropneumatischen Stellglieder doppelt wirkende Hydraulikzylinder sind, deren Zylinderräume mit einem ersten Speicher und deren kolbenstangenseitige Ringräume mit einem zweiten Speicher verbunden sind. Ein Regelventil verbindet oder trennt den zweiten Speicher mit der Druckleitung in Abhängigkeit vom Druck im ersten Speicher. Ein wesentliches Lösungsmerkmal besteht erfindungsgemäß darin, die hydropneumatische Federung in zwei Druckseiten aufzuteilen. Die Hochdruckseite dieses Systems besteht aus den Zylinderräumen der hydropneumatischen Stellglieder sowie einem ersten Speicher. Diese Anordnung wird durch die Niveauregelung ergänzt. Die Niederdruckseite besteht aus den kolbenstangenseitigen Ringräumen der hydropneumatischen Stellglieder und einem zweiten Speicher. Das Regelventil bewirkt den Aufbau eines Gegendrucks auf der Niederdruckseite mit abnehmender Achslast, d. h. abnehmendem Druck auf der Hochdruckseite. Insgesamt erlaubt die erfindungsgemäße Lösung eine Anpassung der hydropneumatischen Federung an große Achslastspreizungen. Das statische Druckverhältnis, resultierend aus größter und kleinster Achslast, führt bei der Lösung nach der Erfindung unter keinen Umständen zu einer vollständigen Entleerung des ersten Speichers, weil mit abnehmender Achslast ein Gegendruck aufgebaut wird. Demzufolge ist eine zuverlässige Funktion der Niveauregelung auch bei diesen großen Achslastspreizungen gewährleistet, weil in allen Belastungszuständen des Fahrzeugs eine Restölmenge im ersten Speicher verbleibt. Durch den regelbaren Gegendruck im Zweiten Speicher tritt ein Parallelschalten der Federwirkung des ersten und zweiten Speichers ein. Es wird eine höhere Federsteifigkeit im Bereich kleinerer Achslasten erreicht. Damit läßt sich die Eigenfrequenz des Aufbaus über den Achslasten im wesentlichen konstant halten (ca. 1 Hertz).

Bei der Erfindung ist das Regelventil als Druckwaage ausgebildet. Mit dieser Druckwaage ist selbsttätig ein vorgegebenes Druckverhältnis zwischen den Drücken des ersten und zweiten Speichers in Abhängigkeit der auftretenden Achslasten stetig regelbar. Selbst bei großen Achslastspreizungen ist die Verwendung eines Speichers möglich, der ein übliches Volumen aufweist und bei einem üblichen Druckverhältnis arbeitet.

Ein weiteres wesentliches lösungsmerkmal besteht erfindungsgemäß darin, das Regelventil als Wegeventil auszubilden, das Anschlüsse aufweist, die zur Druck- und Ablaufleitung sowie die Ringräume führen. Dieses Regelventil wird in Abhängigkeit der Drücke im ersten und zweiten Speicher geschaltet. Hierzu sind entsprechende Steuerleitungen vorgesehen.

Weitere, für die Erfindung wesentliche Merkmale und die daraus resultierende Vorteilen sind der nachfolgenden Beschreibung zweier Ausführungsbeispiele zu entnehmen.

Es zeigen:
- Fig. 1: den Schaltplan einer hydropneumatischen Federung für ein Kraftfahrzeug, insbesondere ein landwirtschaftlich genutztes Fahrzeug;
- Fig. 2: ein stark vereinfachtes Diagramm zur Auslegung der hydropneumatischen Federung nach Fig. 1.

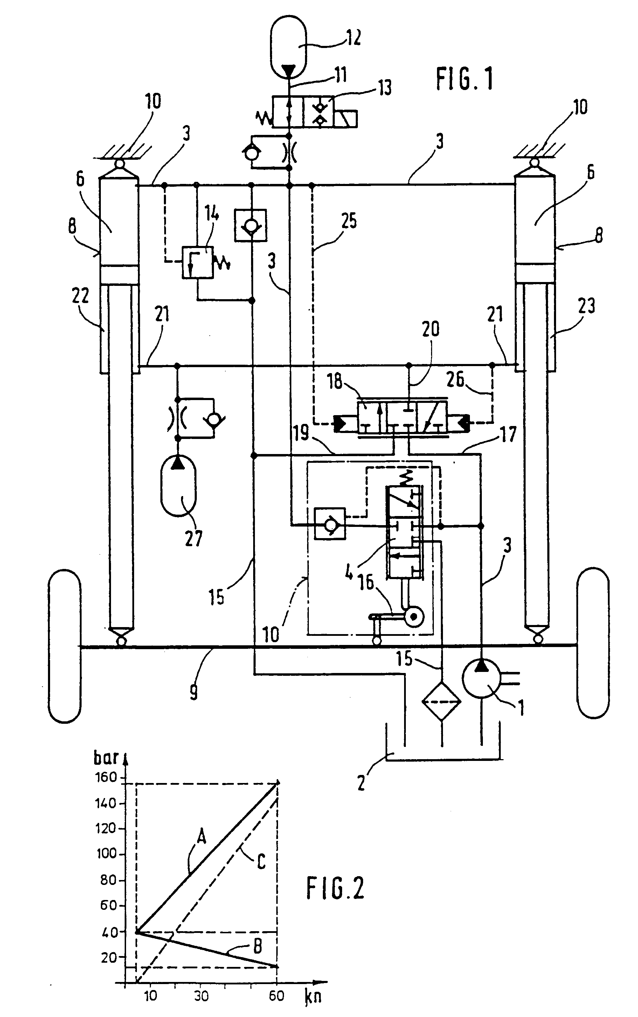

Der Schaltplan nach Fig. 1 gibt den Aufbau einer hydropneumatischen Federung in stark vereinfachter, schematischer Darstellung wieder. Eine Pumpe 1 fördert Druckmittel, zum Beispiel Öl, aus einem Vorratsbehälter 2 in eine Druckleitung 3. Die Druckleitung 3 führt zu einem Niveauregelventil 4 und von hier aus zu Zylinderräumen 5 und 6 von hydropneumatischen Stellgliedern 7 und 8. Die hydropneumatischen Stellglieder sind zwischen gefederten und ungefederten Massen angebracht. Bei der gefederten Masse handelt es sich im vorliegenden Fall um die Achse 9 eines Schleppers, die gelenkt oder ungelenkt ausgebildet sein kann. Die ungefederte Masse besteht insbesondere aus dem Gewicht des Aufbaus 10. Der Aufbau 10 ist durch die schraffierten Flächen lediglich angedeutet. Von der Druckleitung 3 führt eine Verbindungsleitung 11 zu einem ersten Speicher 12. Aus dem Schaltplan folgt ohne weiteres, daß die hydropneumatischen Stellglieder 7 und 8 doppeltwirkende Hydraulikzylinder sind, deren Zylinderräume 5 und 6 mit dem ersten Speicher 12 verbunden sind.
Der erste Speicher 12 kann über ein Sperrventil 13 von der Druckleitung 3 getrennt werden.

Die Druckleitung 3 kann über ein Druckbegrenzungsventil mit einer Ablaufleitung 15 verbunden werden.

### Niveauregelung:

Bei zunehmender Achslast wird Öl aus den Zylinderräumen 5 und 6 der hydropneumatischen Stellglieder 7 und 8 in den ersten Speicher 12 gedrückt. Der Aufbau 10 sinkt demzufolge ab. Ein Lagegeber 16 verstellt das Niveauregelventil so, daß die Pumpe 1 über die Druckleitung 3 den Zylinderräumen 5 und 6 so lange Ölzuführt, bis das ursprüngliche Niveau wieder erreicht ist.

Bei abnehmender Achslast wird das Öl aus dem ersten Speicher 12 in die Zylinderräume 5 und 6 gedrückt. Der Aufbau 10 hebt sich. Der Lagegeber 16 verstellt das Niveauregelventil 4 als Folge hiervon in die oben eingezeichnete Schaltposition, so daß die Zylinderräume 5 und 6 über die Druckleitung 3 mit der Ablaufleitung 15 verbunden werden. Das Niveauregelventil 4 läßt öl aus den Zylinderräumen 5 und 6 bzw. dem ersten Speicher 12 so lange in den Vorratsbehälter 2 ablaufen, bis das ursprüngliche Niveau wieder erreicht ist.

Von der Druckleitung 3 führt eine weitere Verbindungsleitung 17 zu einem Regelventil 18, das im vorliegenden Fall als 3/3-Wege-Ventil ausgebildet ist. In der gezeigten Neutralstellung ist das Regelventil 18 über eine Verbindungsleitung 19 an die Ablaufleitung 15 angeschlossen. Ein weiterer Anschluß 20 führt zu einer Leitung 21. Die Leitung 21 verbindet kolbenstangenseitige Ringräume 22 und 23 der hydropneumatischen Stellglieder 7 und 8 miteinander. An die Leitung 21 ist ein zweiter Speicher 24 angeschlossen.

Eine Steuerleitung 25 verbindet das Regelventil 18 einerseits mit der Druckleitung 3, so daß es in Abhängigkeit vom Druck im ersten Speicher geschaltet wird. Eine weitere Steuerleitung 26 verbindet das Regelventil 18 mit der Leitung 21, so daß es in Abhängigkeit vom Druck im zweiten Speicher geschaltet werden kann.

Die Hauptfunktion des Regelventils 18 besteht darin, den zweiten Speicher 24 in Abhängigkeit vom Druck im ersten Speicher 12 mit der Druckleitung 3 zu verbinden, d. h. einen Gegendruck aufzubauen oder diesen von der Druckleitung zu trennen, d. h., den Gegendruck abzubauen.

Das als 3/3-Wege-Ventil ausgebildete Regelventil 18 arbeitet als Druckwaage, mit der über die Steuerleitungen 25 und 26 selbsttätig ein vorgegebenes Druckverhältnis zwischen den Drücken des ersten und zweiten Speichers 12 und 24 in Abhängigkeit der Belastung der hydropneumatischen Stellglieder 7 und 8 stetig geregelt werden kann. Je nach den praktischen Erfordernissen kann anstelle einer stetigen Funktion (Druck im zweiten Speicher in Abhängigkeit vom Druck im ersten Speicher bzw. der herrschenden Achslast) ein anderer Verlauf, z. B. nach einer Sprungfunktion, eingestellt werden.

Aus dem Diagramm entsprechend Fig. 2 geht der prinzipielle Verlauf der Drücke im ersten und im zweiten Speicher hervor. Das Diagramm zeigt die Druckwerte in bar über der Achslast in Kilonewton. Die mit A bezeichnete Gerade gibt den Druckverlauf im ersten Speicher wieder. Bei geringster Achslast beträgt der niedrigste Druck im ersten Speicher ca. 40 bar. Bei einer Achslast von ca. 60 Kilonewton erreicht der Druck im ersten Speicher ein Maximum von etwa 155 bar.

Der höchste Druck im zweiten Speicher beträgt ca. 40 bar. Hierbei ist die Achslast am geringsten. Der Druck im zweiten Speicher sinkt auf etwa 15 bar bei einer Achslast von ungefähr 60 Kilonewton. Die durch diese Punkte verlaufende Gerade ist mit B bezeichnet. Die gestrichelt eingezeichnete Linie entspricht der Resultierenden, d. h., dem Druck im ersten Speicher unter Berücksichtigung des Druckanteils im zweiten Speicher. Diese Linie ist mit C gekennzeichnet. Durch die Parallelschaltung der Federwirkungen des ersten und des zweiten Speichers entsteht eine Kennlinie, die im Bereich niedriger Achslasten steiler gerichtet verläuft, verglichen mit der Neigung der Geraden A in diesem Bereich. Die hydropneumatische Federung ist hier härter ausgelegt. Ein wesentlicher Vorteil der erfindungsgemäß ausgebildeten hydropneumatischen Federung besteht ferner darin, daß die Eigenfrequenz des Systems im Bereich der Achslasten, im vorliegenden Fall von etwa 10 bis etwa 60 Kilonewton, vergleichsweise konstant verläuft. Vor allem im Bereich kleinerer Achslasten wird die Eigenfrequenz näher zum Wert 1 Hertz angehoben. Bei einer Auslegung der hydropneumatischen Federung, wie sie etwa den in Fig. 2 wiedergegebenen Verhältnissen entspricht, beträgt die Eigenfrequenz bei einer Achslast von ca. 10 Kilonewton etwa 0,8 Hertz und steigt bis zu einem Wert von ca. 1,7 Hertz, was einer Achslast von etwa 60 Kilonewton entspricht.

## Patentansprüche

1. Hydropneumatische Federung für Kraftfahrzeuge, mit hydropneumatischen Stellgliedern (7, 8), die zwischen gefederten und ungefederten Massen (9, 10) angebracht sind und mindestens einem Niveauregelventil (4), welches in Abhängigkeit von der relativen Stellung der gefederten und ungefederten Massen (9, 10) zueinander die Stellglieder (7, 8) in einer ersten Schaltstellung mit einer Druckleitung (3) und in einer zweiten Schaltstellung mit einer Ablaufleitung (15) verbindet und in einer weiteren Schaltstellung diese Verbindungen sperrt, wobei die hydropneumatischen Stellglieder (7, 8) doppelwirkende Hydraulikzylinder sind, deren Zylinderräume (5, 6) mit einem ersten Speicher (12) und deren kolbenstangenseitige Ringräume (22, 23) mit einem zweiten Speicher (27) verbunden sind, und daß ein Regelventil (18) in Abhängigkeit vom Druck im ersten Speicher (12) den zweiten Speicher (27) mit der Druckleitung (3) verbindet oder von der Druckleitung (3) trennt, dadurch **gekennzeichnet,** daß das Regelventil (18) als Druckwaage ausgebildet ist, mit der ein vorgegebenes Druckverhältnis (C) zwischen den Drücken des ersten und zweiten Speichers (12, 27) in Abhängigkeit der Belastung der hydropneumatischen Stellglieder (7, 8) stetig regelbar ist, und daß das Regelventil (18) ein Wegeventil ist, das zur Druck- und Ablaufleitung (3, 15) sowie zu den Ringräumen (22, 23) führende Anschlüsse (3, 19, 20) und unter dem Druck des ersten und des zweiten Speichers (12, 27) stehende Steuerleitungen (25, 26) aufweist.

2. Hydropneumatische Federung nach dem Anspruch 1, dadurch **gekennzeichnet,** daß das Regelventil (18) in den Grenzen eines vorgegebenen Druckverhältnisses der Drücke im ersten und zweiten Speicher (12, 24) in einer Neutralstellung verbleibt, in der der zweite Speicher von der Druck- und Ablaufleitung getrennt ist.

3. Hydropneumatische Federung nach den Ansprüchen 1 und 2, dadurch **gekennzeichnet,** daß das Regelventil (18) ein Wegeventil ist, das zur Druck- und Ablaufleitung (3, 15) sowie die Ringräume (22, 23) führende Anschlüsse (3, 19, 20) und unter dem Druck des ersten und des zweiten Speichers (12, 24) stehende Steuerleitungen (25, 26) aufweist.

4. Hydropneumatische Federung nach Anspruch 1, dadurch **gekennzeichnet,** daß der erste Speicher (12) in einem Druckkreis liegt, dessen Arbeitsdruck gegenüber dem Arbeitsdruck des zweiten Speichers (24), der in einem gesonderten Druckkreis liegt, höher ist.

5. Hydropneumatische Federung nach Anspruch 1, dadurch **gekennzeichnet,** daß dem ersten Speicher ein Sperrventil (13) vorgeschaltet ist.

## Claims

1. Hydropneumatic suspension for motor vehicles, with hydropneumatic actuators (7, 8) which are mounted between sprung and unsprung masses (9, 10) and with at least one level control valve (4) which, dependent on the relative positions of the sprung and unsprung masses (9, 10), connects the actuators (7, 8), in a first operating position, to a pressure line (3) and, in a second operating position, to a discharge line (15) and blocks these connections in a further operating position, the hydropneumatic actuators (7, 8) being double-acting hydraulic cylinders of which the head spaces (5, 6) are connected to a first reservoir (12) and the cylinder spaces (22, 23) on the piston rod end are connected to a second reservoir (27), and a control valve (18) connecting the second reservoir (27) to the pressure line (3) or disconnecting it from the pressure line (3), dependent on the pressure in the first reservoir (12), characterized in that the control valve (18) is designed as a pressure balance by means of which a preset pressure ratio (C) between the pressures of the first and second reservoirs (12, 27) is continuously adjustable as a function of the load of the hydropneumatic actuators (7, 8), and in that the control valve (18) is a directional control valve which has connections (3, 19, 20) leading to the pressure and discharge lines (3, 15) and to the cylinder spaces (22, 23) and control lines (25, 26) pressurized by the first and second reservoirs (12, 27).

2. Hydropneumatic suspension according to Claim 1, characterized in that, within the limits of a preset pressure ratio of the pressures in the first and second reservoirs (12, 27), the control valve (18) remains in a neutral position in which the second reservoir is disconnected from the pressure and discharge lines.

3. Hydropneumatic suspension according to either of Claims 1 or 2, characterized in that the control valve (18) is a directional control valve which has connections (3, 19, 20) leading to the pressure and discharge lines (3, 15) and to the cylinder spaces (22, 23) and control lines (25, 26) pressurized by the first and second reservoirs (12, 27).

4. Hydropneumatic suspension according to Claim 1, characterized in that the first reservoir (12) is located in a pressure circuit of which the working pressure is higher than the working pressure of the second reservoir (27) which is located in a separate pressure circuit.

5. Hydropneumatic suspension according to Claim 1, characterized in that a stop valve (13) is connected in circuit ahead of the first reservoir.

## Revendications

1. Suspension hydropneumatique pour véhicules à moteur, comportant des éléments d'ajustage hydropneumatiques (7, 8), montés entre des masses suspendues et non suspendues (9, 10), et au moins une soupape de réglage de niveau (4) qui, en fonction de la position relative des masses suspendues et non suspendues (9, 10), relie les éléments d'ajustage (7, 8) à un conduit de pression (3) dans une première position d'enclenchement et à un conduit de décharge (15) dans une seconde position d'enclenchement, et bloque ces liaisons dans une autre position d' enclenchement, les éléments d'ajustage hydropneumatiques (7, 8) étant des vérins hydrauliques à double effet dont des chambres cylindriques (5, 6) sont reliées à un premier accumulateur (12) et dont les chambres annulaires (22, 23) du côté de la tige de piston sont reliées à un second accumulateur (27), une soupape de réglage (18) agissant en fonction de la pression dans le premier accumulateur (12) pour relier le second accumulateur (27) au conduit de pression (3) ou pour l'isoler de ce conduit (3), **caractérisée** en ce que la soupape de réglage (18) est agencée en balance de pression avec laquelle une relation prédéterminée (C) entre les pressions du premier et du second accumulateur (12, 27) est réglable en permanence en fonction de la charge des éléments d'ajustage hydropneumatiques (7, 8) et en ce que la soupape de réglage (18) est un distributeur comportant des raccordements (3, 19, 20) aux conduits de pression et de décharge (3, 15) ainsi qu'aux chambres annulaires (22, 23) et des conduits de commande (25, 26) soumis à la pression du premier et du second accumulateur (12, 27).

2. Suspension hydropneumatique selon la revendication 1, **caractérisée** en ce que la soupape de réglage (18), dans les limites d'un rapport prédéterminé entre les pressions du premier et du second accumulateur (12, 24), reste dans une position neutre dans laquelle le second accumulateur est isolé des conduits de pression et de décharge.

3. Suspension hydropneumatique selon les revendications 1 et 2, **caractérisée** en ce que la soupape de réglage (18) est un distributeur comportant des raccordements (3, 19, 20) aux conduits de pression et de décharge (3, 15) ainsi qu'aux chambres annulaires (22, 23) et des conduits de commande (25, 26) soumis à la pression du premier et du second accumulateur (12, 27).

4. Suspension hydropneumatique selon la revendication 1, **caractérisée** en ce que le premier accumulateur (12) se trouve dans un circuit de pression dont la pression de travail est supérieure à celle du second accumulateur (27), lequel se trouve dans un circuit de pression distinct.

5. Suspension hydropneumatique selon la revendication 1, **caractérisée** en ce que le premier accumulateur est précédé d'une soupape d'arrêt (13).
